# EUROPÄISCHE PATENTSCHRIFT

(11) **EP 2 666 738 B1**
(45) Veröffentlichungstag und Bekanntmachung des Hinweises auf die Patenterteilung: **17.09.2014**
(21) Anmeldenummer: 12168616.6
(22) Anmeldetag: 21.05.2012
(51) Int. Cl.: B65G 47/76

(54) **Vorrichtung zum Sortieren von Gegenständen**
Device for sorting objects
Dispositif pour trier des objets

(43) Veröffentlichungstag der Anmeldung: 27.11.2013
(73) Patentinhaber: Wincor Nixdorf International GmbH, 33106 Paderborn (DE)
(72) Erfinder: Springsguth, Stephan, 98074 Langewiesen (DE); Hawrikhoff, Tobias, 99806 Erfurt (DE)
(74) Vertreter: Richly, Erik

(56) Entgegenhaltungen:
- US-A- 3 543 916
- US-A- 4 643 291
- US-A1- 2006 070 855
- US-A1- 2007 102 325
- US-A1- 2010 006 393
- US-B2- 6 615 972

## Beschreibung

Die Erfindung betrifft eine Vorrichtung zum Sortieren von auf einem Förderband geförderten Gegenständen mit einem um eine senkrecht zum Förderband verlaufenden Drehachse schwenkbar gelagerten Umlenkelement, auf das ein Stellorgan einwirkbar ist, so dass der Gegenstand zum einen in einer ersten Schwenkstellung des Umlenkelementes, in der sich das Umlenkelement in Transportrichtung des Förderbandes erstreckt, auf einer Förderbahn des Förderbandes in Transportrichtung weiterförderbar ist, zum anderen und in einer zweiten Schwenkstellung des Umlenkelementes, in der das Umlenkelement sich in einem spitzen Winkel zu der Transportrichtung des Förderbandes erstreckt, von der Förderbahn des Förderbandes seitlich ableitbar ist.

Aus der US 6 736 253 B2 ist eine Vorrichtung zum Sortieren von auf einem Förderband geförderten Gegenständen bekannt, die ein um eine senkrecht zum Förderband schwenkbar angeordnetes Umlenkelement aufweist. Befindet sich das Umlenkelement in einer neutralen ersten Schwenkstellung, werden auf dem Förderband geförderte Gegenstände auf einer Förderbahn in Transportrichtung des Förderbandes weitertransportiert. Wird das Umlenkelement mittels eines Stellorgans in eine seitliche zweite Schwenkstellung verbracht, werden die Gegenstände in eine entsprechende Richtung links oder rechts von dem Förderband abgelenkt, so dass sie die Förderbahn verlassen. Die bekannte Vorrichtung ermöglicht eine seitliche Ausschleusung der Gegenstände in zwei entgegengesetzte Richtungen bezüglich des Förderbandes bzw. der Förderbahn. Das Umlenkelement ist um eine mittig zwischen zwei gegenüberliegenden Seitenrändern des Förderbandes verlaufenden Drehachse schwenkbar gelagert und weist zwei gegenüberliegende aufrechte Seitenwände auf, deren Abstand größer ist als die Quererstreckung der geförderten Gegenstände. Die Ausschleusung der Gegenstände erfolgt somit mittels einer der beiden Seitenwände des Umlenkelementes in Abhängigkeit von der Ausschleusungsrichtung. Als Stellorgan ist in einem Bereich oberhalb des Umlenkelementes ein Schrittmotor oder ein über ein Getriebe mit der Drehachse gekoppelter Gleichstrommotor vorgesehen. Nachteilig an der bekannten Vorrichtung, dass die Positionierung und Ansteuerung des Umlenkelementes relativ aufwendig ist.

Aus der US 2007/0102325 A1 ist es bekannt, Gegenstände von einem Förderband durch einen rotierenden Auswerfer zu entfernen. Die Rotationsbewegung wird erreicht, indem eine ansteuerbare Spule am Auswerfer befestigt wird, welche zwischen mindestens zwei auf einer Kreisbahn angeordneten Magnetpolpaaren verfahren wird.

US 3,543,916 beschreibt eine Vorrichtung zum Ausleiten von insbesondere Schüttgut aus einer Förderrinne. Hierbei wird eine Auslenkplatte über eine konventionelle Kolben-Zylinderanordnung verfahren. Die lineare Verfahrbewegung des Kolbens erfolgt durch entsprechende Ventilschaltungen und Nutzung von fluiden Energieträgern.

Aufgabe der vorliegenden Erfindung ist es daher, eine Vorrichtung zum Sortieren von auf einem Förderband geförderten Gegenständen derart weiterzubilden, dass mit geringem Aufwand ein sicheres und zuverlässiges Ausschleusen von Gegenständen aus einer Förderbahn gewährleistet ist.

Zur Lösung dieser Aufgabe ist die Erfindung in Verbindung mit dem Oberbegriff des Patentanspruchs 1 dadurch gekennzeichnet, dass die Drehachse im Bereich eines Seitenrandes der Förderbahn und/oder des Förderbandes verläuft und dass das Stellorgan als mindestens ein zweistufiges Linearstellorgan ausgebildet ist, das über eine Hebelmechanik mit der Drehachse des Umlenkelementes gekoppelt ist, und dass das zweistufige Linearstellorgan (10, 10') durch zwei in Transportrichtung hintereinander angeordnete und miteinander gekoppelte Zugmagneten (16, 17) gebildet ist.

Die Erfindung sieht ein zweistufiges Linearstellorgan vor, das über eine Hebelmechanik auf ein Umlenkelement so einwirkt, dass das Umlenkelement zwei Schwenkstellungen einnehmen kann. Vorteilhaft wird hierdurch eine einfache und sichere Ausschleusung der Gegenstände gewährleistet.

Durch die zweistufige Ausgestaltung des Linearstellorgans kann insbesondere die Ansteuerung desselben einfach gestaltet werden.

Nach einer bevorzugten Ausführungsform der Erfindung ist das zweistufige Linearstellorgan an einem ersten Ende desselben über einen Stellbolzen gelenkig mit einem Querausleger des Umlenkelementes verbunden. Hierdurch wird eine Hebelmechanik gebildet, die auf einfache Weise eine Umwandlung der Linearbewegung des zweistufigen Linearstellorgans in eine Schwenkbewegung des Umlenkelementes ermöglicht.

Nach einer Weiterbildung der Erfindung ist das Umlenkelement als eine Umlenkklappe mit einer aufrechten Schmalseite ausgebildet, entlang derer die Drehachse verläuft. Das Umlenkelement erstreckt sich somit in einer senkrecht zu der Förderbahn bzw. zum dem Förderband verlaufenden Ebene, die einen einfachen und platzsparenden Aufbau der Vorrichtung ermöglicht zur Umlenkung in eine vorgegebene Ausschleusrichtung.

Nach einer Weiterbildung der Erfindung ist die der Drehachse zugeordnete Schmalseite des Umlenkelementes an einer in Transportrichtung vorne angeordneten Vorderseite des Umlenkelementes angeordnet. In einer die Gegenstände ausschleusenden zweiten Schwenkstellung des Umlenkelementes schlägt das Umlenkelement an einem feststehenden Anschlag, beispielsweise an einem Anschlag des Tragrahmens an, wobei die durch die Förderung bewirkte Anlage des Gegenstandes an dem Umlenkelement diese Anschlagkraft weiter erhöht. Infolge der Förderung des Gegenstandes wird die Anschlagkraft des Umlenkelementes bzw. die Sicherstellung der Positionierung des Umlenkelementes in der zweiten Schwenkstellung somit erhöht.

Nach einer Weiterbildung der Erfindung weisen die beiden Zugmagneten keine Rückstellfedern zum Verbringen der Zugmagneten in eine Ausgangsstellung auf. Stattdessen werden die Zugmagneten durch Ansteuerung des anderen Zugmagneten in die Ausgangsstellung verbracht. Durch wahlweises Ansteuern einer der beiden Zugmagneten wird das Umlenkelement in eine definierte erste oder zweite Schwenkstellung verbracht.

Nach einer Weiterbildung der Erfindung bildet ein Tragrahmen zusammen mit dem mindestens einen Umlenkelement und dem demselben zugeordneten zweistufigen Linearstellorgan ein Umlenkmodul, das eine Umlenkung der Gegenstände in eine erste Ausschleusrichtung und/oder in eine gegenüberliegende zweite Ausschleusrichtung ermöglicht. Nach einer ersten Variante der Erfindung können ein erstes Umlenkelement und ein zweites Umlenkelement aufrecht an gegenüberliegende Längsseiten des Tragrahmens bzw. der Förderbahn angeordnet sein, so dass die sequentiell geförderten Gegenstände nicht nur in Transportrichtung, sondern in eine erste Ausschleusrichtung nach links und in eine zweite Ausschleusrichtung nach rechts umgelenkt werden können. Vorzugsweise wird lediglich eines der beiden Umlenkelemente in die Förderbahn geschwenkt, um den betreffenden Gegenstand in der gewünschten Weise auszuschleusen. Das andere Umlenkelement verbleibt in der Ausgangsstellung parallel zur Transportrichtung. Die Umlenkung des Gegenstandes erfolgt somit durch Ansteuerung bzw. Auslösung lediglich eines einzigen Umlenkelementes, und zwar desjenigen, das sich in der Ausgangsstellung entlang der Längsseite des Tragrahmens bzw. der Förderbahn der Ausschleusrichtung zugewandt ist, zu der der Gegenstand seitlich ausgeschleust werden soll. Vorteilhaft ist das Umlenkmodul kompakt ausgebildet.

Nach einer zweiten Variante der Erfindung umfasst das Umlenkmodul lediglich ein einziges Umlenkelement sowie den zugehörigen zweistufigen Linearstellorgan. In Abhängigkeit von der Positionierung des Umlenkelementes an der ersten Längsseite oder zweiten Längsseite des Tragrahmens erfolgt eine Umlenkung des Gegenstandes in die erste Ausschleusrichtung oder in die zweite Ausschleusrichtung. Diese Variante der Erfindung bietet sich insbesondere dann an, wenn bei der Sortierung eine Umlenkung nur in einer einzigen Ausschleusrichtung vorgesehen sein soll. Die Erfindung ermöglicht somit eine flexible und bedarfsgerechte Anordnung von Umlenkmodulen.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Figur 1: eine Sortiervorrichtung mit zwei in Transportrichtung hintereinander angeordneten Umlenkmodulen, die jeweils eine Umlenkung von Gegenständen in eine links von der Förderbahn orientierten ersten Ausschleusrichtung ermöglichen,
- Figur 2: eine vergrößerte Darstellung des Umlenkmoduls gemäß Figur 1 in einer Ausgangsstellung des Umlenkelementes unter Weglassung eines Deckels eines Tragrahmens, wobei das Umlenkelement an den Tragrahmen gelenkig gelagert und in einem oberen Abschnitt des Tragrahmens ein zweistufiges Linearstellorgan positioniert ist,
- Figur 3: eine perspektivische Darstellung des Umlenkelementes gemäß Figur 2 in einer zweiten Schwenkstellung des Umlenkelementes zur Umlenkung der Gegenstände in die erste Ausschleusrichtung,
- Figur 4: eine Draufsicht auf ein Umlenkmodul, bei dem ein Umlenkelement auf einer in Transportrichtung rechten Seite des Tragrahmens angeordnet ist in einer Ausgangsstellung und
- Figur 5: eine Draufsicht des Umlenkmoduls gemäß Figur 4 in einer zweiten Schwenkstellung des Umlenkelementes zur Ausschleusung von Gegenständen in eine rechts von der Förderbahn orientierte zweite Ausschleusrichtung.

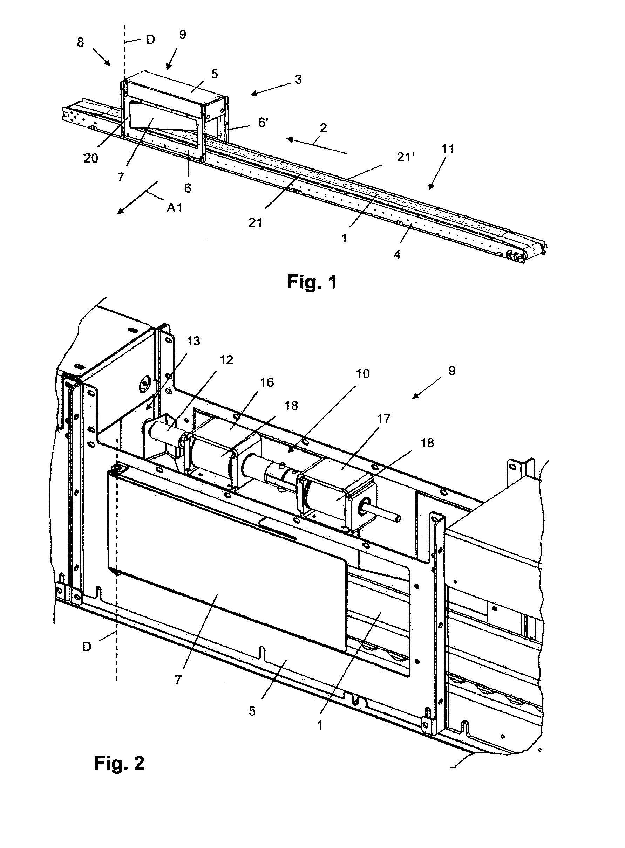

Eine Vorrichtung zum Sortieren von auf einem Förderband 1 geförderten Gegenständen kann vorzugsweise zur Sortierung von Gebinden bzw. Behältern (Flaschen, Dosen etc.) genutzt werden, die zur sortenreinen Vereinzelung unterschiedlichen Aufnahmen seitlich des Förderbandes 1 zugeführt werden sollen. In Figur 1 ist beispielhaft ein in Transportrichtung 2 angeordnetes Umlenkmodul 3 vorgesehen, das an vorgegebenen Stellen einer das Förderband 1 tragenden Leiste 4 beispielsweise durch Verschraubung befestigbar ist.

Das Umlenkmodul 3 weist einen Tragrahmen 5 auf, dessen aufrechte und in Transportrichtung 2 erstreckende erste Längsseite 6 und eine gegenüberliegende zweite Längsseite 6' an der Leiste 4 befestigt sind. Auf der einer ersten Ausschleusrichtung A1 zugewandten ersten Längsseite 6 ist ein Umlenkelement 7 schwenkbar um eine senkrecht zur Transportrichtung 2 und senkrecht zu dem Förderband 1 verlaufenden Drehachse D schwenkbar an dem Transportrahmen 5 gelagert. Die Drehachse D erstreckt sich an einer in Transportrichtung 2 vorne angeordneten Vorderseite 8 des Umlenkmoduls 3.

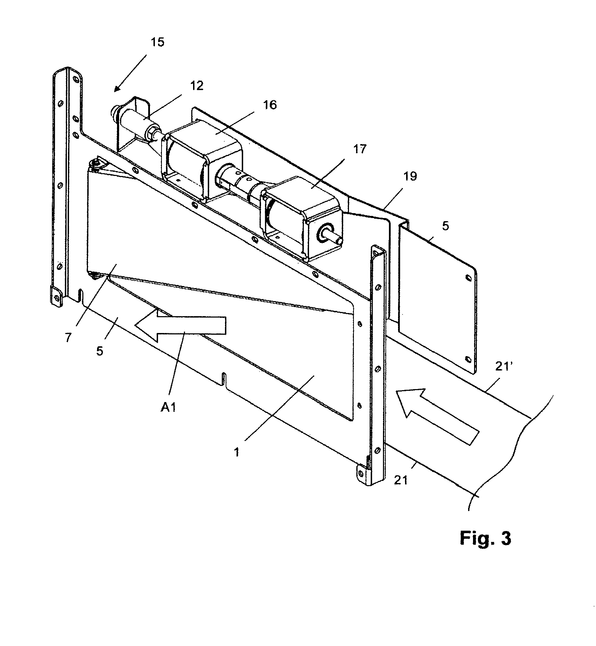

Wie besser aus den Figuren 2 und 3 zu ersehen ist, befindet sich an einer Oberseite 9 des Tragrahmens 5 ein als zweistufiges Linearstellorgan 10 ausgebildetes Stellorgan, mittels dessen das Umlenkelement 7 aus einer ersten Schwenkstellung gemäß Figur 2, in der sich das Umlenkelement 7 in Transportrichtung 2 erstreckt, in eine zweite Schwenkstellung gemäß Figur 3 bringbar ist, in der das Umlenkelement 7 einen spitzen Winkel zu der Transportrichtung 2 bildet und bis zu der gegenüberliegenden zweiten Längsseite 6' der durch das Förderband 1 gebildeten Förderbahn 11 reicht, so dass die Gegenstände unter Anlage an dem schräg gestellten Umlenkelement 7 in die erste Ausschleusrichtung A1 nach links abgeleitet werden können und vice versa.

Das zweistufige Linearstellorgan 10 weist einen Stellbolzen 12 auf, der in Transportrichtung 2 ein- und ausfahrbar ist und über eine Hebelmechanik 13 mit der Drehachse D des Umlenkelementes 7 gekoppelt ist. Im vorliegenden Ausführungsbeispiel weist das Umlenkelement 7 einen Querausleger 14 auf, an dem der an einem ersten Ende 15 des zweistufigen Linearstellorgans 10 angeordnete Stellbolzen 12 gelenkig gelagert ist.

Zur Betätigung des Stellbolzens 12 weist das zweistufige Linearstellorgan 10 einen ersten Zugmagneten 16 und einen in Transportrichtung 2 beabstandeten zweiten Zugmagneten 17 auf, die in entgegengesetzter Richtung auslösbar und/oder betätigbar sind. Die über einen Magneten 18 betätigbaren Zugmagneten 16, 17 sind fest miteinander gekoppelt. Eine Rückstellung des ersten Zugmagneten 16 und des zweiten Zugmagneten 17 erfolgt durch Auslösung des zweiten Zugmagneten 17 bzw. des ersten Zugmagneten 16. Eine die Rückstellkraft bewirkende Rückstellfeder weisen die Zugmagneten 16, 17 nicht auf.

Soll sich das Umlenkelement 7 in der neutralen, den Gegenstand nicht umlenkenden ersten Schwenkstellung gemäß Figur 2 befinden, wird der in Transportrichtung 2 gesehene hintere zweite Zugmagnet 17 angesteuert bzw. betätigt, so dass der Stellbolzen 12 entgegen der Transportrichtung 2 bewegt wird und das Umlenkelement 7 eine zu der Transportrichtung 2 parallele Position einnimmt. Soll das Umlenkelement 7 in die in Figur 3 dargestellte zweite Schwenkstellung zur Umlenkung des Gegenstandes in die erste Ausschleusrichtung A1 bewegt werden, wird der erste Zugmagnet 16 betätigt, so dass der Stellbolzen 12 in Transportrichtung 2 ausgefahren und über den Querausleger 14 das Umlenkelement 7 in eine zu der Transportrichtung 2 nicht parallele Position verbringt. Hierdurch verjüngt sich die Förderbahn 11 in Transportrichtung 2, so dass die Gegenstände in der zweiten Schwenkstellung des Umlenkelementes 7 zur Seite in die erste Ausschleusrichtung A1 umgelenkt werden.

Da die Drehachse D an einer in Transportrichtung 2 gesehenen Vorderseite 8 des Tragrahmens 5 bzw. des Umlenkelementes 7 angeordnet ist, bewirkt das Anstoßen des Gegenstandes gegen das Umlenkelement 7 eine erhöhte Anschlagkraft, die das Umlenkelement 7 in der zweiten Schwenkstellung begünstigt. Der Tragrahmen 5 weist auf der zweiten Längsseite 6' einen Anschlag 19 auf, gegen den das freie Ende des Umlenkelementes 7 in der zweiten Schwenkstellung anstößt.

Das Umlenkelement 7 ist als eine Umlenkklappe ausgebildet, die in einer vertikalen Ebene verläuft und an deren in Transportrichtung 2 gesehenen vorderen Schmalseite 20 die Drehachse D verläuft.

Das in den Figuren 1 bis 3 dargestellte Umlenkmodul 3 weist lediglich ein einziges Umlenkelement 7 auf, das zur Umlenkung der Gegenstände in die erste Ausschleusrichtung A1 auf einer in Transportrichtung 2 gesehen linken Seite des Tragrahmens 5 angeordnet ist.

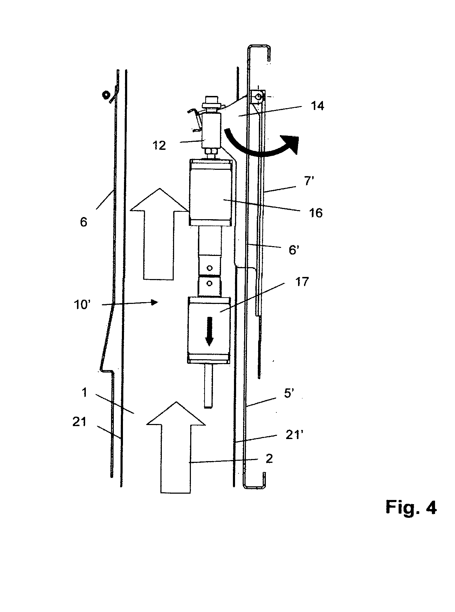

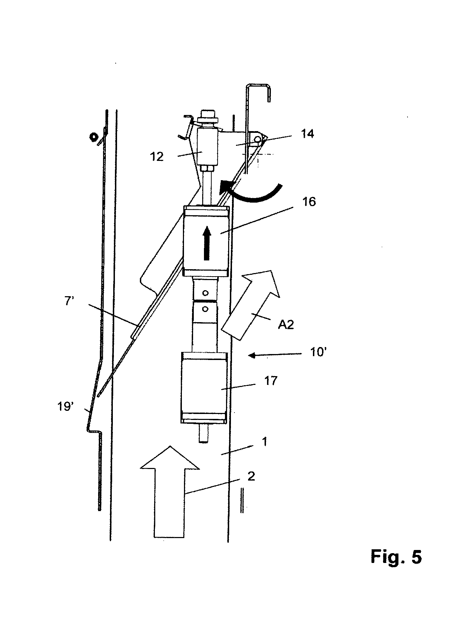

Nach einer zweiten Ausführungsform der Erfindung kann ein Tragrahmen 5' auch so ausgebildet sein, dass ein Umlenkelement 7' und ein demselben zugeordnetes zweistufiges Linearstellorgan 10 auf einer zu der ersten Ausschleusrichtung A1 gegenüberliegenden zweiten Ausschleusrichtung A2 zugewandt angeordnet sind, nämlich im Bereich der zweiten Längsseite 6' des Tragrahmens 5', siehe Figuren 4 und 5. Der Tragrahmen 5' und das Umlenkelement 7' sind spiegelverkehrt bezüglich einer vertikalen Mittelebene der Förderbahn 11 bzw. Förderbandes 1 zu den Tragrahmen 5 bzw. Umlenkelementes 7 angeordnet. Das zweistufige Linearstellorgan 10' ist baugleich zu dem Linearstellorgan der ersten Ausführungsform, also seitlich versetzt zu dem zweistufigen Linearstellorgan 10 im Bereich der zweiten Längsseite 6' des Tragrahmens 5' angeordnet. In der zweiten Schwenkstellung des Umlenkelementes 7' schlägt das freie Ende des Umlenkelementes 7' an einem Anschlag 19' des Tragrahmens 5' an, der sich im Unterschied zu dem Tragrahmen 5 nicht an der zweiten Längsseite 6', sondern an der ersten Längsseite 6 befindet.

Gleiche Bauteile bzw. Bauteilfunktionen der Ausführungsbeispiele sind mit den gleichen Bezugsziffern versehen.

Die Ansteuerung des zweistufigen Linearstellorganes 10' erfolgt in der gleichen Weise wie bei der ersten Ausführungsform gemäß den Figuren 1 bis Figur 3. Bei Ansteuerung des ersten Zugmagneten 16 fährt der Stellbolzen 12 in Transportrichtung 2 aus und bewirkt das Verschwenken des Umlenkelementes 7', bis es an dem Anschlag 19' zur Anlage kommt. Gegenstände können nun entlang der zweiten Ausschleusrichtung A2 zur Seite hin umgelenkt werden. Wird der zweite Zugmagnet 17 angesteuert, fährt der Stellbolzen 12 entgegen der Transportrichtung 2 ein, so dass das Umlenkelement 7' in die zur Transportrichtung 2 parallele Schwenkstellung verbracht wird und die Gegenstände in Transportrichtung 2 weiter förderbar sind.

Nach einer nicht dargestellten weiteren Ausführungsform der Erfindung kann ein Umlenkmodul vorgesehen sein, dass sowohl das erste Umlenkelement 7 als auch das zweite Umlenkelement 7' sowie die dazugehörigen zweistufigen Linearstellorgane 10, 10' aufweist. Die zweistufigen Linearstellorgane 10, 10' können vorzugsweise quer zur Transportrichtung 2 seitlich versetzt nebeneinander angeordnet sein. Vorteilhaft wird hierdurch ein kompaktes Umlenkmodul 3 gebildet, das durch wahlweise Ansteuerung des Umlenkelementes 7 oder 7' ein Ausschleusen der Gegenstände in die erste Ausschleusrichtung A1 oder in die zweite Ausschleusrichtung A2 ermöglicht.

Es ist ersichtlich, dass die Drehachse D aufrecht im Bereich eines Seitenrandes 21 bzw. 21' des Förderbandes 1 bzw. der Förderbahn 11 verläuft, damit eine sichere Umlenkung der Gegenstände in die erste Ausschleusrichtung A1 oder die zweite Ausschleusrichtung A2 gegeben ist. In den vorliegenden Ausführungsbeispielen deckt sich das Förderband 1 mit der Förderbahn 11. Nach einer nicht dargestellten Ausführungsform der Erfindung kann allerdings auch ein relativ breites Förderband vorgesehen sein, so dass mehrere parallele Förderbahnen gebildet sind, entlang derer mehrere Reihen von Gegenständen gleichzeitig in Transportrichtung 2 förderbar sind. Bei dieser Ausführungsform können die Umlenkelemente 7 nicht nur zur Umlenkung in seitlich vom Förderband angeordnete Behälter, sondern auch zum Wechsel der Förderbahn eingesetzt werden. Hierbei müssen sich die Drehachsen D nicht an einem Seitenrand 21, 21' des Förderbandes 1 befinden.

Nach einer nicht dargestellten Ausführungsform der Erfindung können auch mindestens zwei in Transportrichtung 2 beabstandet zueinander angeordnete Umlenkmodule 3 vorgesehen sein, die jeweils ein erstes Umlenkelement 7 und das demselben zugeordnete zweistufige Linearstellorgan 10 und/oder das zweite Umlenkelement 7' sowie das demselben zugeordnete zweistufige Linearstellorgan 10' aufweisen, so dass sequentiell geförderte Gegenstände wahlweise in die erste Ausschleusrichtung A1 und/oder die zweite Ausschleusrichtung A2 umgelenkt werden.

### Bezugszeichenliste

- 1: Förderband
- 2: Transportrichtung
- 3: Umlenkmodul
- 4: Leiste
- 5, 5': Tragrahmen
- 6, 6': 1. Längsseite, 2. Längsseite
- 7, 7': Umlenkelement
- 8: Vorderseite
- 9: Oberseite
- 10, 10': 2stufiges Linearstellorgan
- 11: Förderbahn
- 12: Stellbolzen
- 13: Hebelmechanik
- 14: Querausleger (7)
- 15: 1. Ende (10)
- 16: 1. Zugmagnet
- 17: 2. Zugmagnet
- 18: Magneten
- 19, 19': Anschlag
- 20: Schmalseite (7)
- 21, 21': Seitenrand
- A1: 1. Ausschleusrichtung
- A2: 2. Ausschleusrichtung
- D: Drehachse

## Patentansprüche

1. Vorrichtung zum Sortieren von auf einem Förderband geförderten Gegenständen mit einem um eine senkrecht zum Förderband verlaufenden Drehachse schwenkbar gelagerten Umlenkelement, auf das ein Stellorgan einwirkbar ist, so dass der Gegenstand zum einen in einer ersten Schwenkstellung des Umlenkelementes, in der sich das Umlenkelement in Transportrichtung des Förderbandes erstreckt, auf einer Förderbahn des Förderbandes in Transportrichtung weiterförderbar ist, zum anderen und in einer zweiten Schwenkstellung des Umlenkelementes, in der das Umlenkelement sich in einem spitzen Winkel zu der Transportrichtung des Förderbandes erstreckt, von der Förderbahn des Förderbandes seitlich ableitbar ist, **dadurch gekennzeichnet,**
**dass** die Drehachse (D) im Bereich eines Seitenrandes der Förderbahn (11) und/oder des Förderbandes (1) verläuft und dass das Stellorgan (10, 10') als mindestens ein zweistufiges Linearstellorgan ausgebildet ist, das über eine Hebelmechanik (13) mit der Drehachse (D) des Umlenkelementes (7, 7') gekoppelt ist und
**dass** das zweistufige Linearstellorgan (10, 10') durch zwei in Transportrichtung hintereinander angeordnete und miteinander gekoppelte Zugmagneten (16, 17) gebildet ist.

2. Vorrichtung nach Anspruch 1 **dadurch gekennzeichnet, dass** die Hebelmechanik (13) einen drehfest mit dem Umlenkelement (7, 7') verbundenen Querausleger (14) aufweist, auf den das zweistufige Linearstellorgan (10, 10') so einwirkt, dass das Umlenkelement (7, 7') ausschließlich in die erste Schwenkstellung oder in die zweite Schwenkstellung bringbar ist.

3. Vorrichtung nach Anspruch 1 oder 2, **dadurch gekennzeichnet, dass** das zweistufige Linearstellorgan (10, 10') zur Bildung der Hebelmechanik (13) über einen in Transportrichtung (2) beweglich angeordneten Stellbolzen (12) gelenkig an den Querausleger (14) des Umlenkelementes (7, 7') gelagert ist.

4. Vorrichtung nach einem der Ansprüche 1 bis 3,
**dadurch gekennzeichnet, dass** das Umlenkelement (7, 7') als eine Umlenkklappe mit einer aufrechten Schmalseite (20) ausgebildet ist, an der die Drehachse (D) verläuft.

5. Vorrichtung nach einem der Ansprüche 1 bis 4,
**dadurch gekennzeichnet, dass** die Drehachse (D) aufnehmende Schmalseite (20) des Umlenkelementes (7, 7') eine in Transportrichtung (2) vorne angeordnete Vorderseite des Umlenkelementes (7, 7') bildet.

6. Vorrichtung nach Anspruch 1, **dadurch gekennzeichnet, dass** die beiden Zugmagneten (16, 17) derart angeordnet sind, dass sie in entgegengesetzter Richtung auslösbar und/oder betätigbar sind.

7. Vorrichtung nach Anspruch 1 oder 6, **dadurch gekennzeichnet, dass** die Zugmagneten (16, 17) wechselweise ansteuerbar sind zum Verbringen des Stellbolzens (12) in eine in Transportrichtung (2) vordere Position, so dass sich das Umlenkelement (7, 7') in der zweiten Schwenkstellung befindet, oder in eine zweite Stellung, in der sich das Umlenkelement (7, 7') in der ersten Schwenkstellung befindet.

8. Vorrichtung nach einem der Ansprüche 1 bis 7,
**dadurch gekennzeichnet, dass** das zweistufige Linearstellorgan (10, 10') im Bereich einer Oberseite (9) eines Tragrahmens (5, 5') und das Umlenkelement (7, 7') im Bereich einer Längsseite (6, 6') des Tragrahmens (5, 5') angeordnet sind.

9. Vorrichtung nach Anspruch 8 , **dadurch gekennzeichnet, dass** der Tragrahmen (5, 5') zusammen mit dem an einer ersten Längsseite (6) desselben angeordneten ersten Umlenkelement (7) sowie demselben zugeordneten zweistufigen Linearstellorgan (10) und/oder mit dem an einer zweiten Längsseite (6') des Tragrahmens (5, 5') angeordneten zweiten Umlenkelement (7') sowie dem demselben zugeordneten zweistufigen Linearstellorgan (10') ein Umlenkmodul (3) bildet zur Umlenkung des Gegenstandes in eine erste Ausschleusrichtung (A1) und/oder in eine zweite Ausschleusrichtung (A2).

10. Vorrichtung nach Anspruch 9, **dadurch gekennzeichnet, dass** mindestens zwei Umlenkmodule (3) in Transportrichtung (2) beabstandet zueinander angeordnet sind, die jeweils das erste Umlenkmodul (7) und das demselben zugeordnete zweistufige Linearstellorgan (10) und/oder das zweite Umlenkelement (7') und das demselben zugeordnete zweistufige Linearstellorgan (10') aufweisen zur wahlweisen Umlenkung des Gegenstandes in die erste Ausschleusrichtung (A1) und/oder in die zweite Ausschleusrichtung (A2).

## Claims

1. Apparatus for sorting articles conveyed on a conveying belt, having a deflecting element which is mounted such that it can be pivoted about an axis of rotation running perpendicularly to the conveying belt and is subjected to the action of an adjustment means, in which case the article, on the one hand in a first pivoting position of the deflecting element, in which the deflecting element extends in the transporting direction of the conveying belt, can be conveyed further in the transporting direction on a conveying path of the conveying belt and, on the other hand in a second pivoting position of the deflecting element, in which the deflecting element extends at an acute angle to the transporting direction of the conveying belt, can be diverted laterally from the conveying path of the conveying belt, **characterized**
**in that** the axis of rotation (D) runs in the region of a side periphery of the conveying path (11) and/or of the conveying belt (1), and in that the adjustment means (10, 10') is designed in the form of at least one two-stage linear-adjustment means, which is coupled at the axis of rotation (D) of the deflecting element (7, 7') via a lever mechanism (13), and
**in that** the two-stage linear-adjustment means (10, 10') is formed by two pull-type magnets (16, 17) which are arranged one behind the other in the transporting direction and are coupled to one another.

2. Apparatus according to Claim 1, **characterized in that** the lever mechanism (13) has a transverse extension arm (14), which is connected in a rotationally fixed manner to the deflecting element (7, 7') and on which the two-stage linear-adjustment means (10, 10') acts such that the deflecting element (7, 7') can be moved exclusively into the first pivoting position or into the second pivoting position.

3. Apparatus according to Claim 1 or 2, **characterized in that** the two-stage linear-adjustment means (10, 10'), in order to form the lever mechanism (13), is mounted on the transverse extension arm (14) of the deflecting element (7, 7') in an articulated manner via an adjustment bolt (12), which is arranged in a moveable manner in the transporting direction (2).

4. Apparatus according to one of Claims 1 to 3, **characterized in that** the deflecting element (7, 7') is designed in the form of a deflecting flap with an upright narrow side (20), along which the axis of rotation (D) runs.

5. Apparatus according to one of Claims 1 to 4, **characterized in that** the narrow side (20) of the deflecting element (7, 7'), said narrow side accommodating the axis of rotation (D), forms a front side of the deflecting element (7, 7'), as seen in the transporting direction (2).

6. Apparatus according to Claim 1, **characterized in that** the two pull-type magnets (16, 17) are arranged such that they can be triggered and/or actuated in opposite directions.

7. Apparatus according to Claim 1 or 6, **characterized in that** the pull-type magnets (16, 17) can be activated alternately in order to move the adjustment bolt (12) into a front position, as seen in the transporting direction (2), in which case the deflecting element (7, 7') is located in the second pivoting position, or into a second position, in which the deflecting element (7, 7') is located in the first pivoting position.

8. Apparatus according to one of Claims 1 to 7, **characterized in that** the two-stage linear-adjustment means (10, 10') is arranged in the region of an upper side (9) of a carrying frame (5, 5') and the deflecting element (7, 7') is arranged in the region of a longitudinal side (6, 6') of the carrying frame (5, 5').

9. Apparatus according to Claim 8, **characterized in that** the carrying frame (5, 5') together with the first deflecting element (7), which is arranged on a first longitudinal side (6) of the carrying frame, and the two-stage linear-adjustment means (10), which is assigned to said deflecting element, and/or with the second deflecting element (7'), which is arranged on a second longitudinal side (6') of the carrying frame (5, 5'), and the two-stage linear-adjustment means (10'), which is assigned to said deflecting element, forms a deflecting module (3) in order to deflect the article in a first discharging direction (A1) and/or in a second discharging direction (A2).

10. Apparatus according to Claim 9, **characterized in that** at least two deflecting modules (3) are arranged spaced apart from one another in the transporting direction (2), said modules each having the first deflecting element (7) and the two-stage linear-adjustment means (10), which is assigned to said deflecting element, and/or the second deflecting element (7') and the two-stage linear-adjustment means (10'), which is assigned to said deflecting element, in order to deflect the article optionally in the first discharging direction (A1) and/or in the second discharging direction (A2).

## Revendications

1. Dispositif pour trier des objets transportés sur une bande transporteuse, comprenant un élément de déviation pouvant pivoter autour d'un axe de rotation s'étendant perpendiculairement à la bande transporteuse, sur lequel élément de déviation peut agir un organe de réglage, de telle sorte que l'objet puisse d'une part, dans une première position de pivotement de l'élément de déviation dans laquelle l'élément de déviation s'étend dans la direction de transport de la bande transporteuse, être transporté plus loin dans la direction de transport sur une voie de transport de la bande transporteuse, et puisse d'autre part, dans une deuxième position de pivotement de l'élément de déviation dans laquelle l'élément de déviation s'étend suivant un angle aigu par rapport à la direction de transport de la bande transporteuse, être évacué latéralement de la voie de transport de la bande transporteuse, **caractérisé**
**en ce que** l'axe de rotation (D) s'étend dans la région d'un bord latéral de la voie de transport (11) et/ou de la bande transporteuse (1) et en ce que l'organe de réglage (10, 10') est réalisé sous la forme d'au moins un organe de réglage linéaire à deux étages qui est accouplé à l'axe de rotation (D) de l'élément de déviation (7, 7') par le biais d'un mécanisme à levier (13) et
**en ce que** l'organe de réglage linéaire à deux étages (10, 10') est formé par deux électroaimants d'attraction (16, 17) disposés l'un derrière l'autre dans la direction de transport et accouplés l'un à l'autre.

2. Dispositif selon la revendication 1, **caractérisé en ce que** le mécanisme à levier (13) comprend un bras transversal en porte-à-faux (14) relié de manière solidaire en rotation à l'élément de déviation (7, 7'), sur lequel bras transversal en porte-à-faux agit l'organe de réglage linéaire à deux étages (10, 10') de telle sorte que l'élément de déviation (7, 7') puisse être amené exclusivement à la première position de pivotement ou à la deuxième position de pivotement.

3. Dispositif selon la revendication 1 ou 2, **caractérisé en ce que**, pour former le mécanisme à levier (13), l'organe de réglage linéaire à deux étages (10, 10') est monté sur le bras transversal en porte-à-faux (14) de l'élément de déviation (7, 7') de manière articulée par le biais d'un boulon de réglage (12) disposé de manière mobile dans la direction de transport (2).

4. Dispositif selon l'une quelconque des revendications 1 à 3, **caractérisé en ce que** l'élément de déviation (7, 7') est réalisé sous la forme d'un clapet de déviation présentant un côté étroit (20) vertical sur lequel s'étend l'axe de rotation (D).

5. Dispositif selon l'une quelconque des revendications 1 à 4, **caractérisé en ce que** le côté étroit (20) recevant l'axe de rotation (D) de l'élément de déviation (7, 7') forme un côté avant, disposé à l'avant dans la direction de transport (2), de l'élément de déviation (7, 7').

6. Dispositif selon la revendication 1, **caractérisé en ce que** les deux électroaimants d'attraction (16, 17) sont disposés de telle sorte qu'ils puissent être déclenchés et/ou actionnés en sens inverses.

7. Dispositif selon la revendication 1 ou 6, **caractérisé en ce que** les électroaimants d'attraction (16, 17) peuvent être commandés en alternance pour faire passer le boulon de réglage (12) à une position avant dans la direction de transport (2), de telle sorte que l'élément de déviation (7, 7') se trouve dans la deuxième position de pivotement, ou à une deuxième position dans laquelle l'élément de déviation (7, 7') se trouve dans la première position de pivotement.

8. Dispositif selon l'une quelconque des revendications 1 à 7, **caractérisé en ce que** l'organe de réglage linéaire à deux étages (10, 10') est disposé dans la région d'un côté supérieur (9) d'un cadre de support (5, 5') et l'élément de déviation (7, 7') est disposé dans la région d'un côté longitudinal (6, 6') du cadre de support (5, 5').

9. Dispositif selon la revendication 8, **caractérisé en ce que** le cadre de support (5, 5') forme, conjointement avec le premier élément de déviation (7) disposé sur un premier côté longitudinal (6) de celui-ci ainsi qu'avec l'organe de réglage linéaire à deux étages (10) associé audit élément de déviation et/ou avec le deuxième élément de déviation (7') disposé sur un deuxième côté longitudinal (6') du cadre de support (5, 5') ainsi qu'avec l'organe de réglage linéaire à deux étages (10') associé audit élément de déviation, un module de déviation (3) pour la déviation de l'objet dans une première direction d'évacuation (A1) et/ou dans une deuxième direction d'évacuation (A2).

10. Dispositif selon la revendication 9, **caractérisé en ce qu'**au moins deux modules de déviation (3) sont disposés de manière espacée les uns des autres dans la direction de transport (2), lesquels comprennent respectivement le premier élément de déviation (7) et l'organe de réglage linéaire à deux étages (10) associé à celui-ci et/ou le deuxième élément de déviation (7') et l'organe de réglage linéaire à deux étages (10') associé à celui-ci pour la déviation de manière sélective de l'objet dans la première direction d'évacuation (A1) et/ou dans la deuxième direction d'évacuation (A2).
